# EUROPEAN PATENT APPLICATION

(11) **EP 4 535 523 A1**
(43) Date of publication of application: **09.04.2025**
(21) Application number: 23829538.0
(22) Date of filing: 27.03.2023
(51) Int. Cl.: H01M 50/167, H01M 50/107, H01M 10/04

(54) **BATTERY, MANUFACTURING METHOD THEREFOR, BATTERY MODULE, AND ELECTRIC DEVICE**

(30) Priority: 30.06.2022 CN 202210763100
(71) Applicant: Ningde Amperex Technology Limited, Ningde, Fujian 352100 (CN)
(72) Inventor: FANG, Ye, Dongguan, Guangdong 523000 (CN)
(74) Representative: Klunker IP Patentanwälte PartG mbB
(86) International application number: PCT/CN2023/084153
(87) International publication number: WO 2024/001347

(57) **Abstract**

This application provides a battery and a manufacturing method thereof, a battery module, and an electric device. A housing body of the battery is cylindrical, and a housing side wall of the housing body has an annular groove. The annular groove has a first groove side wall, a groove bottom wall, and a second groove side wall that are sequentially connected. The first groove side wall is located on a side closer to the housing bottom wall, and the second groove side wall is located on a side farther away from the housing bottom wall. Height of the groove bottom wall is h1 and height of an opening of the annular groove is h2. An included angle between an extension direction of the first groove side wall and the housing side wall adjacent is θ1, where 0.2h1 ≤ h2 ≤ 0.8h1 and 10° ≤ θ1 ≤ 80°. In the battery, the ratio of h2 to h1 and the value of θ1 are set to make the crimping degree of the annular groove meet a specified criterion. This can alleviate the problem that cylindrical batteries are prone to electrolyte leakage.

## Description

### CROSS-REFERENCE TO RELATED APPLICATIONS

This application claims priority to Chinese Patent Application No. 2022107631004, filed on June 30, 2022 and entitled "BATTERY AND MANUFACTURING METHOD THEREOF, BATTERY MODULE, AND ELECTRIC DEVICE", which is incorporated herein by reference in its entirety.

### TECHNICAL FIELD

This application relates to the field of batteries and specifically, to a battery and a manufacturing method thereof, a battery module, and an electric device.

### BACKGROUND

Cylindrical batteries are prone to electrolyte leakage during manufacturing and use.

### SUMMARY

Various types of batteries such as cylindrical, soft pack, and prismatic batteries are on the market. Each type of battery has its advantages and disadvantages, but due to their advantages like high production rate, low cost, and high energy density, cylindrical batteries are widely used and occupy a large share of the market. However, current cylindrical batteries are susceptible to sealing failure during sealing due to the rigidity of steel housings. Consequently, batteries are prone to electrolyte leakage during manufacturing. In addition, steel housings are prone to corrosion in use. Steel housings are prone to be corroded through in long-term use so that batteries are prone to electrolyte leakage in use.

To alleviate the problem that cylindrical batteries are prone to electrolyte leakage, current proposed technical solutions mainly focus on corrosion alleviation. Corrosion alleviation is usually implemented by using a housing body with a high strength, for example, thickening a plating layer of the housing body, and for another example, performing electroplating and heat treatment on a plating layer. However, the foregoing proposed solutions usually lead to thicker housing bodies, affected battery energy density, increased costs, increased manufacturing and processing difficulty, and the like.

In view of these, with in-depth study, the applicant has designed a battery. An annular groove of a housing of the battery is crimped and the crimping degree of the annular groove is controlled to meet a specified criterion, thereby alleviating the problem that cylindrical batteries are prone to electrolyte leakage.

In view of the above problems, this application is intended to provide a battery and a manufacturing method thereof, a battery module, and an electric device to alleviate the problem that cylindrical batteries are prone to electrolyte leakage.

Some embodiments of this application are implemented in the following manner. According to a first aspect, this application provides a battery. The battery includes a cylindrical housing body, where the housing body includes an annular bent edge, a housing side wall, and a housing bottom wall that are sequentially connected; the housing side wall has an annular groove distributed along a circumferential direction of the housing body; the annular groove has a first groove side wall, a groove bottom wall, and a second groove side wall that are sequentially connected; the first groove side wall is located on a side of the annular groove closer to the housing bottom wall, and the second groove side wall is located on a side of the annular groove farther away from the housing bottom wall; in a height direction of the housing body, height of the groove bottom wall is h1 and height of an opening of the annular groove is h2; an end of the first groove side wall close to the housing side wall is a first end of groove side wall, and an end of the first groove side wall away from the housing side wall is a second end of groove side wall; and a connection line direction from the first end of groove side wall to the second end of groove side wall is an extension direction of the first groove side wall, and an included angle between the extension direction of the first groove side wall and the housing side wall adjacent is θ1; where 0.2h1 ≤ h2 ≤ 0.8h1 and 10° ≤ θ1 ≤ 80°.

In the technical solution of some embodiments of this application, h2 is less than h1 and θ1 is less than 90°, indicating that the annular groove is so crimped that it tilts downward with a reduced height at the opening. 0.2h1 ≤ h2 ≤ 0.8h1 and 10° ≤ θ1 ≤ 80° are set to make the crimping degree of the annular groove meet a specified criterion. This can alleviate the problem that cylindrical batteries are prone to electrolyte leakage. If the ratio of h2 to h1 is too large and θ1 is too large, it indicates that the annular groove is under-crimped, resulting in insufficient airtightness between the annular groove and a partial sealing ring corresponding to the annular groove, and thus likely electrolyte leakage. If the ratio of h2 to h1 is too small and θ1 is too small, it indicates that the annular groove is over-crimped, leading to likely falling off a plating layer on the surface of a joint between the first groove side wall and the housing side wall, and thus corrosion in use, while severe corrosion leads to electrolyte leakage.

In some embodiments, 0.2h1 ≤ h2 ≤ 0.5h1 and 10° ≤ θ1 ≤ 60°. In this design, setting 0.2h1 ≤ h2 ≤ 0.5h1 and 10° ≤ θ1 ≤ 60° makes the annular groove have a more suitable crimping degree. This can better alleviate the problem that batteries are prone to electrolyte leakage.

In some embodiments, in a radial direction of the housing body, an end of the annular bent edge close to the housing side wall is a first bent-edge end and an end of the annular bent edge away from the housing side wall is a second bent-edge end; and a connection line direction from the first bent-edge end to the second bent-edge end is a bent edge direction, and an included angle between the bent edge direction and the housing side wall adjacent is θ2, where 1° < (90° - θ2) ≤ 25°.

In this design, θ2 indicates the value of the included angle between the annular bent edge and the housing side wall adjacent, and (90° - θ2) indicates an angle by which the annular bent edge is bent away from a position where the annular bent edge is perpendicular to the housing side wall adjacent. In other words, (90° - θ2) indicates a downward bending degree of the annular bent edge. Setting 1° < (90° - θ2) ≤ 25° makes the downward bending degree of the annular bent edge meet a specified criterion, thereby guaranteeing sufficient airtightness between the annular bent edge and a partial sealing ring corresponding to the annular bent edge while preventing the annular bent edge from causing airtightness-compromising damage to the partial sealing ring corresponding to the annular bent edge.

In some embodiments, 5° ≤ (90° - θ2) ≤ 20°. In this design, setting 5° ≤ (90° - θ2) ≤ 20° makes the annular bent edge have a more suitable downward bending degree to guarantee better airtightness between the annular bent edge and a partial sealing ring corresponding to the annular bent edge.

In some embodiments, 1 mm ≤ h1 ≤ 2 mm. In this design, setting 1 mm ≤ h1 ≤ 2 mm makes the height of the groove bottom wall of the annular groove meet a specified criterion. On this basis, setting the ratio of h2 to h1 and the value of θ1 can more effectively alleviate the problem that cylindrical batteries are prone to electrolyte leakage.

In some embodiments, an end of the second groove side wall close to the housing side wall is a third end of groove side wall and an end of the second groove side wall away from the housing side wall is a fourth end of groove side wall; and a connection line direction from the fourth end of groove side wall to the third end of groove side wall is an extension direction of the second groove side wall, and an included angle between the extension direction of the second groove side wall and the housing side wall adjacent is θ3, where 85° ≤ θ3 ≤ 95°.

In this design, setting 85° ≤ θ3 ≤ 95° makes the second groove side wall and the housing side wall adjacent basically perpendicular to each other. In a case that the annular groove is so crimped that it tilts downward with a reduced height at the opening, it indicates that when the annular groove is crimped, the second groove side wall basically neither tilts nor deforms. Because the annular groove mainly performs sealing through pressing between the second groove side wall and a partial sealing ring corresponding to the second groove side wall, this configuration guarantees that crimping induced deformation can desirably improve the airtightness between the second groove side wall and the partial sealing ring corresponding to the second groove side wall.

In some embodiments, outer diameter of the housing body is D, and width of the annular bent edge in a radial direction of the housing body is L1, where 0.1D ≤ L1 ≤ 0.2D. In this design, setting 0.1D ≤ L1 ≤ 0.2D makes the ratio of the width of the annular bent edge to the outer diameter of the housing body meet a specified criterion, facilitating downward bending of the housing body to form the annular bent edge in a manufacturing process. D of batteries of particular dimensions is generally fixed. On this basis, if the ratio of L1 to D is too large, the width of the annular bent edge is too large and therefore it is not easy to control the downward bending angle of the annular bent edge, making processing difficult. If the ratio of L1 to D is too small, the width of the annular bent edge is too small and therefore it is not easy to perform downward bending on the housing body so as to form the annular bent edge, making processing difficult and likely causing insufficient airtightness between the annular bent edge and a partial sealing ring corresponding to the annular bent edge.

In some embodiments, a part of the housing side wall located between the annular groove and the annular bent edge is a cap part; in the height direction of the housing body, height of the cap part is h3; and in a radial direction of the housing body, width of the annular bent edge is L1; where 0.8L1 ≤ h3 ≤ 1.5L1.

In this design, the cap part and the annular bent edge are sealing parts of the housing body located on a side of the annular groove farther away from the housing bottom wall. For batteries of particular dimension, a sum of the dimensions of the sealing parts meets a specified criterion. If the ratio of h3 to L1 is too small, it indicates that h3 is too small. In this case, L1 is too large and therefore it is not easy to control the downward bending angle of the annular bent edge, making processing difficult. If the ratio of h3 to L1 is too large, it indicates that h3 is too large. In this case, L1 is too small and therefore it is not easy to perform downward bending on the housing body so as to form the annular bent edge, making processing difficult and likely causing insufficient airtightness between the annular bent edge and a partial sealing ring corresponding to the annular bent edge.

According to a second aspect, this application provides a battery module including a box and the battery according to the foregoing embodiments. Multiple batteries are accommodated in the box.

According to a third aspect, this application provides an electric device including the battery in the foregoing embodiments.

According to a fourth aspect, this application provides a manufacturing method of battery. The manufacturing method includes: providing a presealed housing body of a battery, where the presealed housing body is cylindrical; the presealed housing body includes a to-be-bent housing wall, a housing side wall, and a housing bottom wall that are sequentially connected; the to-be-bent housing wall is configured to bend down to form an annular bent edge; the housing side wall has an annular groove distributed along a circumferential direction of the presealed housing body; the annular groove has a first groove side wall, a groove bottom wall, and a second groove side wall that are sequentially connected; the first groove side wall is located on a side of the annular groove closer to the housing bottom wall, and the second groove side wall is located on a side of the annular groove farther away from the housing bottom wall; in a height direction of the presealed housing body, height of the groove bottom wall is h1 and height of an opening of the annular groove is h2; an end of the first groove side wall close to the housing side wall is a first end of groove side wall, and an end of the first groove side wall away from the housing side wall is a second end of groove side wall; and a connection line direction from the first end of groove side wall to the second end of groove side wall is an extension direction of the first groove side wall, and an included angle between the extension direction of the first groove side wall and the housing side wall adjacent is θ1; bending down the to-be-bent housing wall to form the annular bent edge; and applying, at the top of the annular bent edge, a crimping force acting toward the housing bottom wall so that the annular groove crimped satisfies a preset condition, where the preset condition is 0.2h1 ≤ h2 ≤ 0.8h1 and 10° ≤ θ1 ≤ 80°.

In the technical solution of embodiments of this application, after the to-be-bent housing wall is bent down to form the annular bent edge, the crimping force acting toward the housing bottom wall is applied at the top of the annular bent edge, so as to crimp the annular groove. On this basis, 0.2h1 ≤ h2 ≤ 0.8h1 and 10° ≤ θ1 ≤ 80° are set as a criterion for crimping the annular groove so that the crimping degree of the annular groove meets a specified criterion. This can alleviate the problem that cylindrical batteries are prone to electrolyte leakage.

In some embodiments, the manufacturing method further includes: before the step of bending down the to-be-bent housing wall to form the annular bent edge, inserting a support member for preventing deformation of the annular groove into the annular groove; and after the step of bending down the to-be-bent housing wall to form the annular bent edge but before the step of applying, at the top of the annular bent edge, a crimping force acting toward the housing bottom wall, removing the support member from the annular groove.

In this design, before the step of bending down the to-be-bent housing wall to form the annular bent edge, the support member for preventing deformation of the annular groove is inserted into the annular groove, thereby avoiding deformation of the annular groove in a process of forming the annular bent edge, and facilitating more accurate control of the crimping degree of the annular groove when the crimping force is applied at the top of the annular bent edge.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of some embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery module according to some embodiments of this application;
FIG. 3 is an exploded view of the battery in FIG. 2;
FIG. 4 is a schematic structural diagram of a housing of a battery according to an embodiment of this application;
FIG. 5 is a schematic diagram of a partial structure of a housing of a battery according to an embodiment of this application;
FIG. 6 is a schematic diagram of a partial structure of a housing of a battery according to an embodiment of this application;
FIG. 7 is a schematic diagram of a partial structure of a housing of a battery according to an embodiment of this application;
FIG. 8 is a schematic diagram of a partial structure of a housing of a battery according to an embodiment of this application;
FIG. 9 is a schematic diagram of a partial structure of a housing of a battery according to an embodiment of this application;
FIG. 10 is a process flowchart of a manufacturing method of battery according to an embodiment of this application;
FIG. 11 is a schematic diagram of a working state of a partial structure of a presealed housing body according to an embodiment of this application;
FIG. 12 is a process flowchart of a manufacturing method of battery according to an embodiment of this application;
FIG. 13 shows a first intermediate state of a partial structure of a presealed housing body according to an embodiment of this application;
FIG. 14 shows a second intermediate state of a partial structure of a presealed housing body according to an embodiment of this application;
FIG. 15 is a process flowchart of a manufacturing method of battery according to an embodiment of this application;
FIG. 16 is an electron microscope image of morphology inspection of a plating layer in test example 1; and
FIG. 17 is an electron microscope image of morphology inspection of a plating layer in test example 1.

### Reference signs:

1000. vehicle;
100. battery module; 200. controller; 300. motor;
10. box; 11. first portion; 12. second portion; 13. accommodating space;
20. battery; 21. housing; 22. electrode assembly;
211. housing body; 212. cover; 213. sealed space; 214. sealing ring; 215. presealed housing body; 216. support member;
2111. annular bent edge; 2111a. first bent-edge end; 2111b. second bent-edge end;
2112. housing side wall; 21121. cap part; 21121a. first cap end; 21121b. second cap end;
2113. housing bottom wall; 2114. annular groove; 21141. first groove side wall; 21141a. first end of groove side wall; 21141b. second end of groove side wall; 21142. groove bottom wall; 21142a. first end of groove bottom wall; 21142b. second end of groove bottom wall; 21143. second groove side wall; 21143a. third end of groove side wall; 21143b. fourth end of groove side wall;
21144. opening of annular groove;
2151. to-be-bent housing wall;
A. circumferential direction of housing body; B. height direction of housing body; C. radial direction of housing body; A1. circumferential direction of presealed housing body; and B1. height direction of presealed housing body.

### DETAILED DESCRIPTION OF EMBODIMENTS

The following describes in detail some embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", "third" and the like are merely intended to distinguish between different objects and shall not be understood as any indication or implication of relative importance or any implicit indication of the number, sequence or primary-secondary relationship of the technical features indicated.

In the description of some embodiments of this application, the orientations or positional relationships indicated by the technical terms "thickness", "inside", "outside" and the like are based on the orientations or positional relationships as shown in the accompanying drawings. These terms are merely for ease and brevity of description of some embodiments of this application rather than indicating or implying that the apparatuses or components mentioned must have specific orientations or must be constructed or manipulated according to specific orientations, and therefore shall not be construed as any limitations on embodiments of this application.

In the description of some embodiments of this application, unless otherwise specified and defined explicitly, the technical terms "mount", "connect", "join", "fix" and the like should be understood in their general senses. For example, they may refer to a fixed connection, a detachable connection, or an integral connection and may refer to a direct connection or an indirect connection via an intermediate medium. Persons of ordinary skill in the art can understand specific meanings of these terms in the embodiments of this application as appropriate to specific situations.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that some embodiments described herein may be combined with other embodiments.

In some embodiments of this application, the same reference signs denote the same components. For brevity, in different embodiments, detailed descriptions of the same components are not repeated. It should be understood that, as shown in the accompanying drawings, sizes such as height, length, and width of various components and sizes such as height, length, and width of integrated devices in some embodiments of this application are merely for illustrative purposes and should not constitute any limitations on this application.

In this application, an electric device may take various forms, for example, a mobile phone, a portable device, a notebook computer, an electric bicycle, an electric car, a ship, a spacecraft, an electric toy, or an electric tool. For example, the spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, the electric device of an embodiment of this application being a vehicle is used as an example for description of the following embodiments.

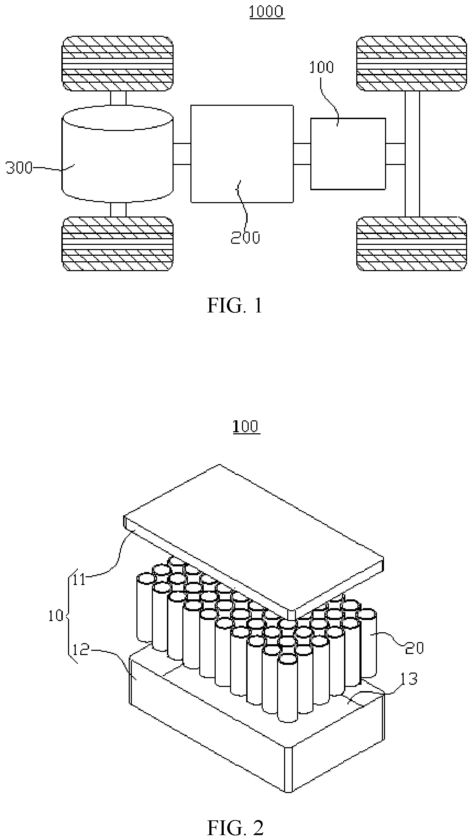

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery module 100 inside, where the battery module 100 may be disposed at the bottom, front or rear of the vehicle 1000. The battery module 100 may be configured to supply power to the vehicle 1000. For example, the battery module 100 may be used as an operational power source for the vehicle 1000. The vehicle 1000 may further include a controller 200 and a motor 300, where the controller 200 is configured to control the battery module 100 to supply power to the motor 300, for example, to satisfy power needs of start, navigation, and driving of the vehicle 1000.

In some embodiments of this application, the battery module 100 can be used as not only the operational power source for the vehicle 1000 but also a driving power source for the vehicle 1000, replacing or partially replacing fossil fuel or natural gas to provide driving traction for the vehicle 1000.

In this application, the battery module 100 is a single physical module that includes one or more batteries 20 for providing a higher voltage and capacity. The battery module 100 typically includes a box 10 configured to enclose one or more batteries 20. The box 10 can prevent liquids or other foreign matter from affecting charging or discharging of the battery 20.

Refer to FIG. 2. FIG. 2 is an exploded view of a battery module 100 according to some embodiments of this application. The battery module 100 may include a box 10 and a battery 20, and the battery 20 is accommodated in the box 10. The box 10 is configured to accommodate the battery 20, and the box 10 may have various structures. In some embodiments, the box 10 may include a first portion 11 and a second portion 12. The first portion 11 and the second portion 12 fit together to jointly define an accommodating space 13 for accommodating the battery 20. The second portion 12 may be a hollow structure with one end open, the first portion 11 is a plate-shaped structure, and the first portion 11 covers the opening side of the second portion 12 so as to form the box 10 having the accommodating space 13. Alternatively, the first portion 11 and the second portion 12 may both be hollow structures with one side open, and the opening side of the first portion 11 is engaged with the opening side of the second portion 12 so as to form the box 10 having the accommodating space 13. Certainly, the first portion 11 and the second portion 12 may have a variety of shapes, for example, cylinder, cuboid, or the like.

In the battery module 100, one or multiple batteries 20 may be provided. If multiple batteries 20 are provided, the multiple batteries 20 may be connected in series, parallel, or series-parallel, where being connected in series-parallel means a combination of series and parallel connections of the multiple batteries 20. The multiple batteries 20 may be directly connected in series, parallel, or series-parallel, and then an entirety of the multiple batteries 20 is accommodated in the box 10. The multiple batteries 20 may alternatively be connected first in series, parallel, or series-parallel first to form a module, and then multiple modules are connected in series, parallel, or series-parallel to form an entirety which is accommodated in the box 10. The battery module 100 may further include other structures. For example, the multiple batteries 20 may be electrically connected via a busbar so that the multiple batteries 20 are connected in series, parallel, or series-parallel.

Each battery 20 may be a secondary battery or a primary battery and may be a lithium-sulfur battery, a sodium-ion battery, or a magnesium-ion battery, without being limited thereto.

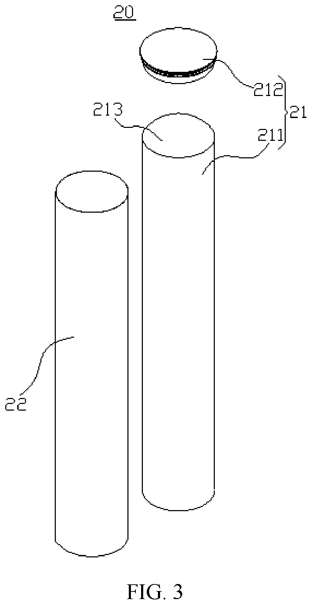

Refer to FIG. 3. FIG. 3 is an exploded view of the battery 20 in FIG. 2. The battery 20 refers to a smallest element constituting the battery module 100. The battery 20 may include a housing 21, an electrode assembly 22, and an electrolyte. The electrode assembly 22 and the electrolyte are both accommodated in the housing 21.

The housing 21 may include a housing body 211 and a cover 212. The housing body 211 is a component configured to form an internal sealed space 213 of the battery 20 together with the cover 212. The internal sealed space 213 formed can be configured to accommodate the electrode assembly 22, the electrolyte, and other components. The cover 212 is a component that fits over an opening of the housing body 211 to separate an internal environment of the battery 20 from an external environment. The shape of the cover 212 may be adapted to the shape of the housing body 211 to fit the housing body 211. The cover 212 may be further provided with functional components such as an electrode terminal and a pressure relief structure. A sealing ring 214 is configured between the opening of the housing body 211 and the cover 212 to implement airtightness between the housing body 211 and the cover 212.

The housing body 211 and the cover 212 may be made of various materials, for example, not limited to copper, iron, aluminum, stainless steel, aluminum alloy, or other metal. The sealing ring 214 may be made of various materials, for example, not limited to PP (polypropylene), PC (polycarbonate), PET (polyethylene terephthalate), or other materials that are resistant to electrolyte corrosion and fatigue and that has high toughness. A plating layer may be formed on the outer surface of the housing body 211, and the plating layer may be made various materials, for example, not limited to Ni, Cr, or other corrosion-resistant materials.

The electrode assembly 22 may include a positive electrode plate, a negative electrode plate, and a separator. Working of the battery 20 mainly relies on migration of metal ions between the positive electrode plate and the negative electrode plate. The separator may be made of PP (polypropylene, polypropylene), PE (polyethylene, polyethylene), or the like. The positive electrode plate includes a positive electrode current collector and a positive electrode active substance. A lithium-ion battery 20 is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance. The negative electrode current collector may be made of copper, and the negative electrode active substance may be carbon, silicon, or the like. In addition, the electrode assembly 22 may be a wound structure or a laminated structure, but some embodiments of this application are not limited thereto.

The specific structure of the battery 20 proposed in some embodiments of this application is next described in detail with reference to the accompanying drawings.

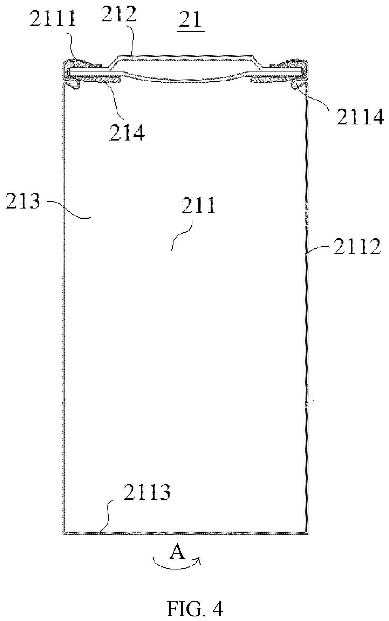

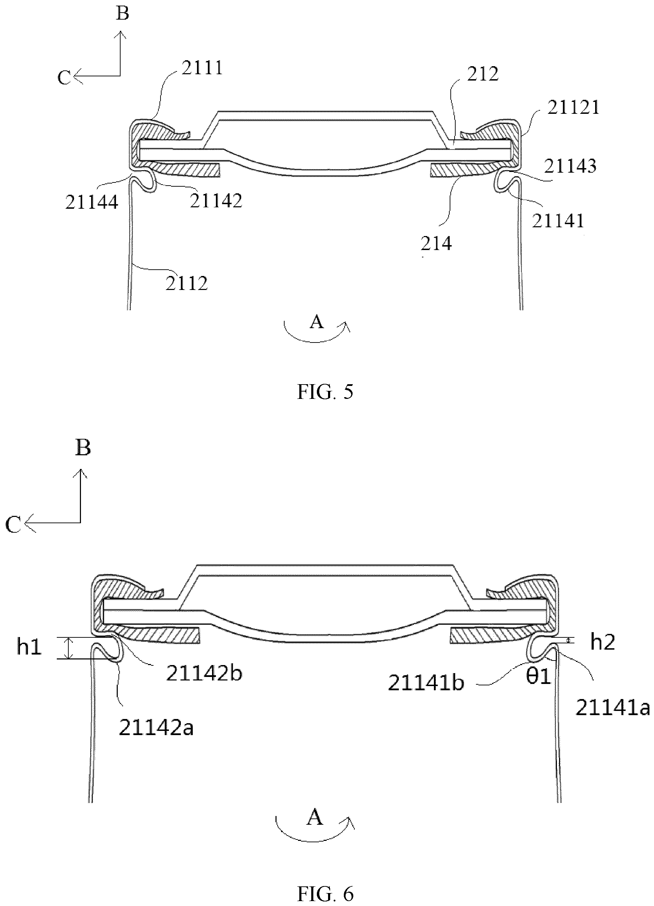

In a first aspect, according to some embodiments of this application, refer to FIGs. 4 and 5. This application provides a battery 20. The battery 20 includes a cylindrical housing body 211. The housing body 211 includes an annular bent edge 2111, a housing side wall 2112, and a housing bottom wall 2113 that are sequentially connected. The housing side wall 2112 has an annular groove 2114 distributed along a circumferential direction A of the housing body. The annular groove 2114 has a first groove side wall 21141, a groove bottom wall 21142, and a second groove side wall 21143 that are sequentially connected. In a height direction B of the housing body, the first groove side wall 21141 is located on a side of the annular groove 2114 closer to the housing bottom wall 2113, and the second groove side wall 21143 is located on a side of the annular groove 2114 farther away from the housing bottom wall 2113.

In this application, a plating layer may be formed on an outer side of the housing body 211. The housing body 211 may be an integral structure, in other words, the annular bent edge 2111, the housing side wall 2112, and the housing bottom wall 2113 are formed integrally. The housing body 211 being cylindrical means that the battery 20 is a cylindrical battery 20, with the housing side wall 2112 being cylindrical as a whole; the housing bottom wall 2113 having a circular cross-section perpendicular to the height direction B of the housing body, and the housing bottom wall 2113 being located at the bottom of the housing side wall 2112 and completely closing the bottom of the housing side wall 2112. The annular bent edge 2111 has a circular cross-section perpendicular to the height direction B of the housing body, and the annular bent edge 2111 is located at top of the housing side wall 2112 and loops once around the edge at the top of the housing side wall 2112.

The first groove side wall 21141, the groove bottom wall 21142, and the second groove side wall 21143 all loop once along the circumferential direction A of the housing body. On a longitudinal cross-section of the housing body 211 through an axis, the opening 21144 of the annular groove faces away from the axis of the housing body 211. The groove bottom wall 21142 and the opening 21144 of the annular groove are distributed opposite each other along a radial direction C of the housing body.

The annular bent edge 2111 is a structure for crimping the edge of the cover 212 together with the annular groove 2114. The annular bent edge 2111 is located at the opening end of the housing body 211. The annular bent edge 2111 extends from the edge at the top of the housing side wall 2112 toward the middle of the housing body 211. In the height direction B of the housing body, the annular bent edge 2111 and the second groove side wall 21143 are distributed opposite and spaced apart. Three parts: the annular bent edge 2111, a part of the housing side wall 2112 located between the annular groove 2114 and the annular bent edge 2111, and the second groove side wall 21143 forms a cap groove, and an opening of the cap groove faces toward the axis of the housing body 211. The cap groove is configured to accommodate the edge of the cover 212. The sealing ring 214 may be wrapped around an edge of the cover 212. The sealing ring 214 may extend from an upper surface of the edge of the cover 212 to a lower surface of the edge of the cover 212. The sealing ring 214 is located between the cap groove and the edge of the cover 212. Sealing contact occurs between the sealing ring 214 and the annular bent edge 2111 and between the sealing ring 214 and the second groove side wall 21143.

Refer to FIG. 6, in the height direction B of the housing body, height of the groove bottom wall 21142 is h1 and height of the opening 21144 of the annular groove is h2. An end of the first groove side wall 21141 close to the housing side wall 2112 is a first end of groove side wall 21141a, and an end of the first groove side wall 21141 away from the housing side wall 2112 is a second end of groove side wall 21141b; and a connection line direction from the first end of groove side wall 21141a to the second end of groove side wall 21141b is an extension direction of the first groove side wall 21141, and an included angle between the extension direction of the first groove side wall 21141 and the housing side wall 2112 adjacent is θ1; where 0.2h1 ≤ h2 ≤ 0.8h1 and 10° ≤ θ1 ≤ 80°.

The first end of groove side wall 21141a is connected to the housing side wall 2112, and the second end of groove side wall 21141b is connected to the groove bottom wall 21142. An end of the groove bottom wall 21142 connected to the first groove side wall 21141 is a first end of groove bottom wall 21142a, and an end of the groove bottom wall 21142 connected to the second groove side wall 21143 is a second end of groove bottom wall 21142b. A joint of the groove bottom wall 21142 and the first groove side wall 21141 has a corner and the corner (for example, the middle point of the corner) can represent the joint of the two, namely, ends of the two. In this application, when other components are connected to each other by a corner, ends of the components may also be determined according to the above criterion. Details are not repeated.

The height of the groove bottom wall is a distance from a lowest point to a highest point of the annular groove on the longitudinal cross-section of the housing body through the axis in the height direction of the housing body. As shown in FIG. 6, the height of the groove bottom wall 21142 is a distance between the first end of groove bottom wall 21142a (that is, the lowest point of the annular groove) and the second end of groove bottom wall 21142b (the highest point of the annular groove) on the longitudinal cross-section of the housing body 211 through the axis in the height direction B of the housing body.

The height of the opening of the annular groove is a distance between two ends of the opening of the annular groove in the side wall on the longitudinal cross-section of the housing body through the axis in the height direction of the housing body. As shown in FIG. 6, the height of the opening 21144 of the annular groove is a distance between a side of the opening close to the first groove side wall 21141 (also on the housing side wall 2112) and a side of the opening close to the second groove side wall 21143 (also on the housing side wall 2112) on the longitudinal cross-section of the housing body 211 through the axis in the height direction B of the housing body.

The connection line direction from the first end of groove side wall 21141a to the second end of groove side wall 21141b is an extension direction corresponding to a connection line between the first end of groove side wall 21141a and the second end of groove side wall 21141b on the longitudinal cross-section of the housing body 211 through the axis.

The housing side wall 2112 adjacent in the description of the extension direction of the first groove side wall 21141 and the housing side wall 2112 adjacent is a part of the housing side wall 2112 directly connecting to the first groove side wall 21141.

θ1 is an included angle between the extension direction of the first groove side wall 21141 and the housing side wall 2112 adjacent on the longitudinal cross-section of the housing body 211 through the axis.

In usual settings, the height of the groove bottom wall 21142 and the height of the opening 21144 of the annular groove are the same. The first groove side wall 21141 and the second groove side wall 21143 extend along the radial direction C of the housing body and are perpendicular to the housing side wall 2112. In the technical solution of this embodiment of this application, 0.2h1 ≤ h2 ≤ 0.8h1 indicates that the annular groove 2114 has a reduced height at the opening, and 10° ≤ θ1 ≤ 80° indicates that the first groove side wall 21141 tilts downward. In other words, the annular groove 2114 in the housing body 211 of this embodiment of this application is so crimped that it tilts downward with a reduced height at the opening. It is found through in-depth study that setting 0.2h1 ≤ h2 ≤ 0.8h1 and 10° ≤ θ1 ≤ 80° makes the crimping degree of the annular groove 2114 meet a specified criterion, guaranteeing that the annular groove 2114 has an excellent crimping effect on the sealing ring 214, thereby alleviating the problem that cylindrical batteries 20 are prone to electrolyte leakage. If the ratio of h2 to h1 is too large and θ1 is too large, it indicates that the annular groove2114 is under-crimped, resulting in insufficient airtightness between the annular groove 2114 (for example, the second groove side wall 21143) and a partial sealing ring 214 corresponding to the annular groove 2114, and thus likely electrolyte leakage. If the ratio of h2 to h1 is too small and θ1 is too small, it indicates that the annular groove 2114 is over-crimped, leading to likely falling off a plating layer on the surface of a joint between the first groove side wall 21141 and the housing side wall 2112, and thus corrosion in use, while severe corrosion leads to electrolyte leakage.

In the technical solution of this embodiment of this application, crimping the annular groove 2114 improves the airtightness, and precise control over the crimping degree of the annular groove 2114 can maintain accurate control over the dimensions of the battery 20, that is, effectively control dimension parameters such as the height and internal space of the battery 20, facilitating precise calculation, design, and evaluation of the amount of electrolyte to be injected, electrolyte retention capacity after gassing, and internal cavity pressure of the battery 20.

In some embodiments, 0.2h1 ≤ h2 ≤ 0.5h1, where the ratio of h2 to h1 is, for example, but not limited to any one of 0.2h1, 0.3h1, 0.4h1, and 0.5h1 or in a range defined by any two of these values, and 10° ≤ θ1 ≤ 60°, where θ1 is, for example, but not limited to any one of 10°, 20°, 30°, 40°, 50°, and 60° or in a range defined by any two of these values.

In this design, setting 0.2h1 ≤ h2 ≤ 0.5h1 and 10° ≤ θ1 ≤ 60° makes the annular groove 2114 have a more suitable crimping degree. This can better alleviate the problem that batteries 20 are prone to electrolyte leakage.

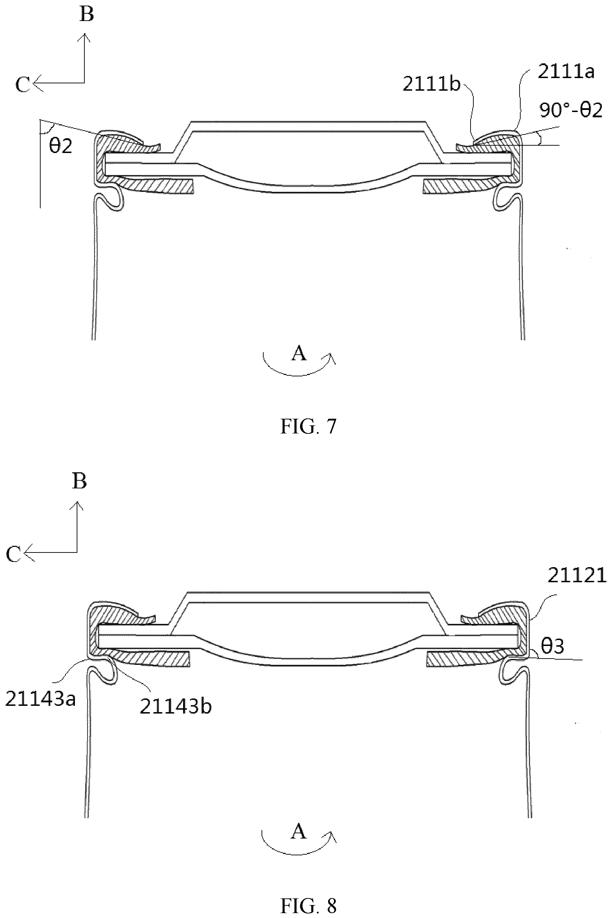

Refer to FIG. 7. In some embodiments, in a radial direction C of the housing body, an end of the annular bent edge 2111 close to the housing side wall 2112 is a first bent-edge end 2111a and an end of the annular bent edge 2111 away from the housing side wall 2112 is a second bent-edge end 2111b; and a connection line direction from the first bent-edge end 2111a to the second bent-edge end 2111b is a bent edge direction, and an included angle between the bent edge direction and the housing side wall 2112 adjacent is θ2, where 1° < (90° - θ2) ≤ 25°.

The connection line direction from the first bent-edge end 2111a to the second bent-edge end 2111b is an extension direction corresponding to a connection line between the first bent-edge end 2111a and the second bent-edge end 2111b on the longitudinal cross-section of the housing body 211 through the axis.

The housing side wall 2112 adjacent in the description of the bent edge direction and the housing side wall 2112 adjacent is a part of the housing side wall 2112 directly connecting to the annular bent edge 2111.

θ2 is an included angle between the bent edge direction and the housing side wall 2112 adjacent on the longitudinal cross-section of the housing body 211 through the axis.

θ2 indicates the value of the included angle between the annular bent edge 2111 and the housing side wall 2112 adjacent, and (90° - θ2) indicates an angle by which the annular bent edge 2111 is bent away from a position where the annular bent edge 2111 is perpendicular to the housing side wall 2112 adjacent. In other words, (90° - θ2) indicates a downward bending degree of the annular bent edge 2111.

In this design, setting 1° < (90° - θ2) ≤ 25° makes the downward bending degree of the annular bent edge 2111 meet a specified criterion, thereby guaranteeing sufficient airtightness between the annular bent edge 2111 and a partial sealing ring 214 corresponding to the annular bent edge 2111 while preventing the annular bent edge 2111 from causing airtightness-compromising damage to the partial sealing ring 214 corresponding to the annular bent edge 2111.

In some embodiments, 5° ≤ (90° - θ2) ≤ 20°, where (90° - θ2) is, for example, but not limited to any one of 5°, 10°, 15°, and 20° or in a range defined by any two of these values.

In this design, setting 5° ≤ (90° - θ2) ≤ 20° makes the annular bent edge 2111 have a more suitable downward bending degree to guarantee better airtightness between the annular bent edge 2111 and a partial sealing ring 214 corresponding to the annular bent edge 2111.

In this application, unless otherwise specified, the material of each part in the battery 20, the size of each part, the size ratio between different parts, the angle between different parts, and the like may be selected with reference to conventional models of batteries 20, for example, 18650 or 21700. In addition, after setting the dimensions of some components, the dimensions of other components may also be correspondingly set according to the design requirements of conventional models.

In some embodiments, 1 mm ≤ h1 ≤ 2 mm, where h1 is, for example, but not limited to any one of 1 mm, 1.1 mm, 1.2 mm, 1.3 mm, 1.4 mm, 1.5 mm, 1.6 mm, 1.7 mm, 1.8 mm, 1.9 mm, and 2 mm or in a range defined by any two of these values.

In this design, setting 1 mm ≤ h1 ≤ 2 mm makes the height of the groove bottom wall 21142 of the annular groove 2114 meet a specified criterion. On this basis, the battery 20 has proper dimensions, and therefore setting the ratio of h2 to h1 and the value of θ1 can more effectively alleviate the problem that cylindrical batteries 20 are prone to electrolyte leakage.

Refer to FIG. 8. In some embodiments, an end of the second groove side wall 21143 close to the housing side wall 2112 is a third end of groove side wall 21143a and an end of the second groove side wall 21143 away from the housing side wall 2112 is a fourth end of groove side wall 21143b; and a connection line direction from the fourth end of groove side wall 21143b to the third end of groove side wall 21143a is an extension direction of the second groove side wall 21143, and an included angle between the extension direction of the second groove side wall 21143 and the housing side wall 2112 adjacent is θ3, where 85° ≤ θ3 ≤ 95°.

The third end of groove side wall 21143a is connected to the housing side wall 2112, and the fourth end of groove side wall is connected to the groove bottom wall 21142. The connection line direction from the fourth end of groove side wall 21143b to the third end of groove side wall 21143a is an extension direction corresponding to a connection line between the third end of groove side wall 21143a and the fourth end of groove side wall 21143b on the longitudinal cross-section of the housing body 211 through the axis.

The housing side wall 2112 adjacent in the description of the extension direction of the second groove side wall 21143 and the housing side wall 2112 adjacent is a part of the housing side wall 2112 directly connecting to the second groove side wall 21143 and may be the cap part 21121.

θ3 is an included angle between the extension direction of the second groove side wall 21143 and the housing side wall 2112 adjacent on the longitudinal cross-section of the housing body 211 through the axis.

In an example, θ3 is 90°, and this indicates that the second groove side wall 21143 and the housing side wall 2112 adjacent are perpendicular.

In this design, setting 85° ≤ θ3 ≤ 95° makes the second groove side wall 21143 and the housing side wall 2112 adjacent basically perpendicular to each other. In a case that the annular groove 2114 is so crimped that it tilts downward with a reduced height at the opening, it indicates that when the annular groove 2114 is crimped, the second groove side wall 21143 basically neither tilts nor deforms. Because the annular groove 2114 mainly performs sealing through pressing between the second groove side wall 21143 and a partial sealing ring 214 corresponding to the second groove side wall 21143, this configuration guarantees that crimping induced deformation can desirably improve the airtightness between the second groove side wall 21143 and the partial sealing ring 214 corresponding to the second groove side wall 21143.

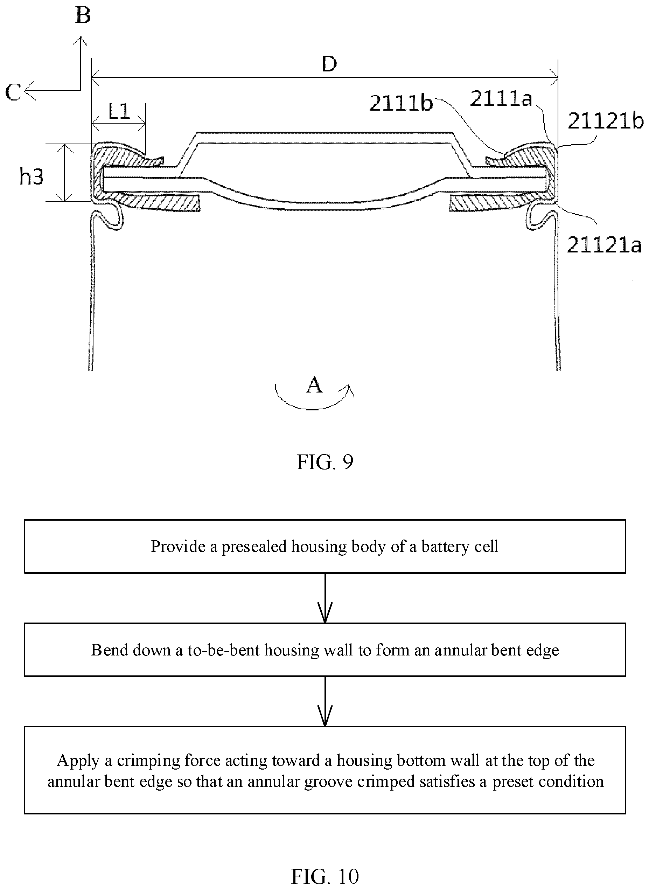

Refer to FIG. 9. In some embodiments, outer diameter of the housing body 211 is D, and width of the annular bent edge 2111 is L1 in a radial direction C of the housing body, where 0.1D ≤ L1 ≤ 0.2D. The ratio of L1 to D is, for example, but not limited to any one of 0.1, 0.11, 0.12, 0.13, 0.14, 0.15, 0.16, 0.17, 0.18, 0.19, and 0.2 or in a range defined by any two of these values.

The width of the annular bent edge 2111 is a distance between the first bent-edge end 2111a and the second bent-edge end 2111b on the longitudinal cross-section of the housing body 211 through the axis in the radial direction C of the housing body.

D of batteries 20 of particular dimensions is generally fixed. On this basis, if the ratio of L1 to D is too large, the width of the annular bent edge 2111 is too large and therefore it is not easy to control the downward bending angle of the annular bent edge 2111, making processing difficult. If the ratio of L1 to D is too small, the width of the annular bent edge 2111 is too small and therefore it is not easy to perform downward bending on the housing body 211 so as to form the annular bent edge 2111, making processing difficult and likely causing insufficient airtightness between the annular bent edge 2111 and a partial sealing ring 214 corresponding to the annular bent edge 2111.

In this design, setting 0.1D ≤ L1 ≤ 0.2D makes the ratio of the width of the annular bent edge 2111 to the outer diameter of the housing body 211 meet a specified criterion, facilitating downward bending of the housing body 211 to form the annular bent edge 2111 in a manufacturing process.

Refer to FIG. 9. In some embodiments, a part of the housing side wall 2112 located between the annular groove 2114 and the annular bent edge 2111 is a cap part 21121; in the height direction B of the housing body, height of the cap part 21121 is h3; and in a radial direction of the housing body, width of the annular bent edge 2111 is L1; where 0.8L1 ≤ h3 ≤ 1.5L1. The ratio of h3 to L1 is, for example, but not limited to any one of 0.8, 0.9, 1, 1.1, 1.2, 1.3, 1.4, and 1.5 or in a range defined by any two of these values.

In the height direction B of the housing body, an end of the cap part 21121 close to the annular groove 2114 is a first cap end 21121a, and the first cap end 21121a may be connected to the third end of groove side wall 21143a of the second groove side wall 21143. An end of the cap part 21121 close to the annular bent edge 2111 is a second cap end 21121b, and the second cap end 21121b may be connected to the first bent-edge end 2111a of the annular bent edge 2111. The height of the cap part 21121 is a distance between the first cap end 21121a and the second cap end 21121b on the longitudinal cross-section of the housing body 211 through the axis in the height direction B of the housing body.

The cap part 21121 and the annular bent edge 2111 are sealing parts of the housing body 211 located on a side of the annular groove 2114 farther away from the housing bottom wall 2113. For batteries 20 of particular dimension, a sum of the dimensions of the sealing parts meets a specified criterion. If the ratio of h3 to L1 is too small, it indicates that h3 is too small. In this case, L1 is too large and therefore it is not easy to control the downward bending angle of the annular bent edge 2111, making processing difficult. If the ratio of h3 to L1 is too large, it indicates that h3 is too large. In this case, L1 is too small and therefore it is not easy to perform downward bending on the housing body 211 so as to form the annular bent edge 2111, making processing difficult and likely causing insufficient airtightness between the annular bent edge 2111 and a partial sealing ring 214 corresponding to the annular bent edge 2111.

In this design, setting 0.8L1 ≤ h3 ≤ 1.5L1 makes the width of the annular bent edge 2111 controlled within a proper range, facilitating downward bending of the housing body 211 to form the annular bent edge 2111 in a manufacturing process.

According to a second aspect, this application provides a battery module 100 including a box 10 and the battery 20 according to the foregoing embodiments. The battery 20 is accommodated in the box 10.

According to a third aspect, this application provides an electric device including the battery 20 in the foregoing embodiments.

According to a fourth aspect, this application provides a manufacturing method of battery 20 according to some embodiments of this application, as shown in FIG. 4. Refer FIGs. 10 to 14. The manufacturing method includes: providing a presealed housing body 215 of a battery 20, where the presealed housing body 215 is cylindrical; the presealed housing body 215 includes a to-be-bent housing wall 2151, a housing side wall 2112, and a housing bottom wall 2113 (not shown in the figure) that are sequentially connected; the to-be-bent housing wall 2151 is configured to bend down to form an annular bent edge 2111; the housing side wall 2112 has an annular groove 2114 distributed along a circumferential direction A1 of the presealed housing body; with reference to FIGs. 5 and 6, the annular groove 2114 has a first groove side wall 21141, a groove bottom wall 21142, and a second groove side wall 21143 that are sequentially connected; the first groove side wall 21141 is located on a side of the annular groove 2114 closer to the housing bottom wall 2113, and the second groove side wall 21143 is located on a side of the annular groove 2114 farther away from the housing bottom wall 2113; in a height direction B1 of the presealed housing body, height of the groove bottom wall 21142 is h1 and height of an opening 21144 of the annular groove is h2; an end of the first groove side wall 21141 close to the housing side wall 2112 is a first end of groove side wall 21141a, and an end of the first groove side wall 21141 away from the housing side wall 2112 is a second end of groove side wall 21141b; and a connection line direction from the first end of groove side wall 21141a to the second end of groove side wall 21141b is an extension direction of the first groove side wall 21141, and an included angle between the extension direction of the first groove side wall 21141 and the housing side wall 2112 adjacent is θ1; bending down the to-be-bent housing wall 2151 to form the annular bent edge 2111; and applying, at the top of the annular bent edge 2111, a crimping force acting toward the housing bottom wall 2113 so that the annular groove 2114 crimped satisfies a preset condition, where the preset condition is 0.2h1 ≤ h2 ≤ 0.8h1 and 10° ≤ θ1 ≤ 80°.

The manufacturing method of battery 20 provided in this embodiment of this application can be used to manufacture the battery 20 provided in the foregoing embodiment, and process steps and parameters may be designed according to the structural requirements of the battery 20 of the foregoing embodiment.

The housing body 211 in the battery 20 is obtained from the presealed housing body 215 through deformation during sealing. In the manufacturing method, the deformation of the presealed housing body 215 occurs during sealing mainly includes: the to-be-bent housing wall 2151 is bent down to form the annular bent edge 2111, and the annular groove 2114 is crimped so that the height of the opening 21144 of the annular groove is reduced by a specified degree and the first groove side wall 21141 tilts down by a specified degree.

The presealed housing body 215 proposed in the manufacturing method corresponds to the housing body 211 in the battery 20. In the presealed housing body 215, reference may be made to the relevant description of the housing body 211 of the battery 20 for both term explanation and design requirements for dimensions, angles, and the like of structures such as the groove bottom wall 21142 and the groove side wall except for structures such as the to-be-bent housing wall 2151 and the annular groove 2114 that deform during sealing. Details are not repeated herein.

The to-be-bent housing wall 2151 is configured to bend down to form the annular bent edge 2111 and goes through bending during sealing. The to-be-bent housing wall 2151 may be the same as the annular bent edge 2111 in size, material and, other requirements except for extension direction. Optionally, the annular bent edge 2111 extends along the height direction B1 of the presealed housing body.

The annular groove 2114 is crimped during sealing and is configured, for example, according to a conventional design before crimping. Specifically, the height of the groove bottom wall 21142 and the height of the opening 21144 of the annular groove are the same, and the first groove side wall 21141 and the second groove side wall 21143 both extend along the radial direction of the housing body and are perpendicular to the housing side wall 2112.

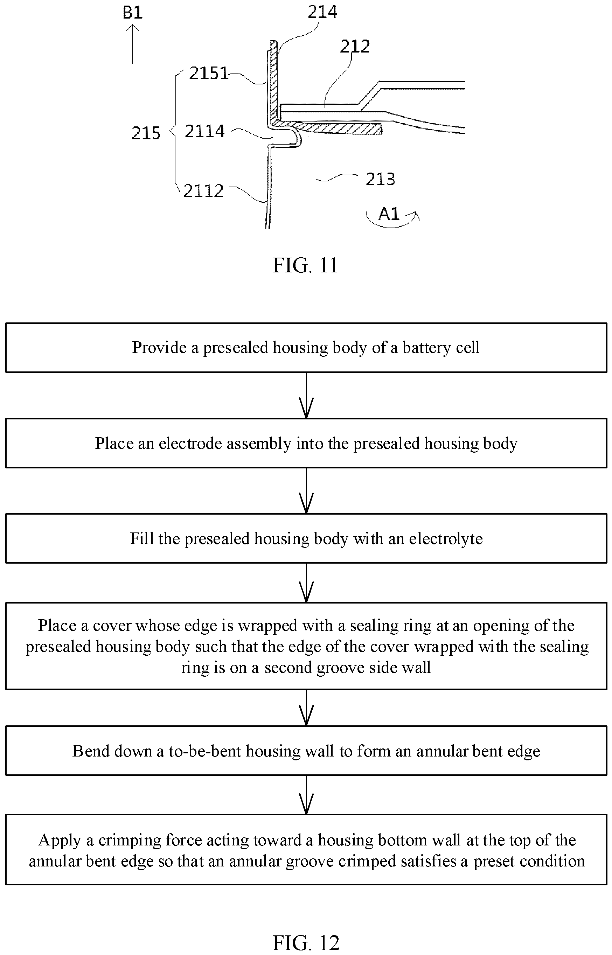

It should be noted that the assembling of the battery 20 further includes the step of configuring an electrode assembly 22, a cover 212, and a sealing ring 214. Specifically, refer to FIG. 12. The electrode assembly 22 may be first placed into the presealed housing body 215, the presealed housing body 215 is filled with an electrolyte, and then the cover 212 with the edge wrapped with the partial sealing ring 214 is placed at an opening of the presealed housing body 215 such that the edge of the cover 212 wrapped with the partial sealing ring 214 is on the second groove side wall 21143. Then, the to-be-bent housing wall 2151 is bent down to form the annular bent edge 2111, and finally a crimping force is applied to crimp the annular groove 2114.

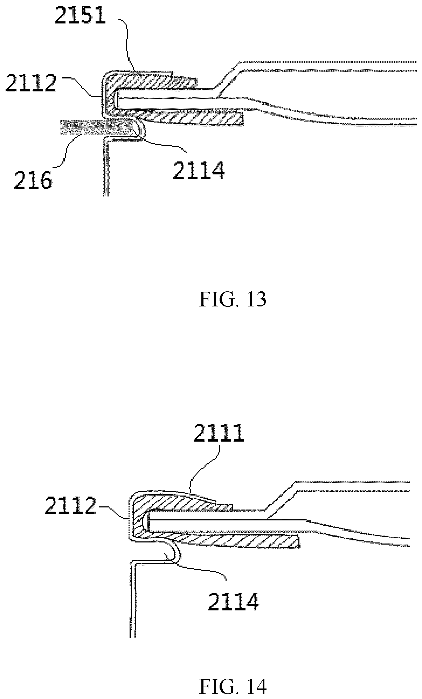

In the step of bending down the to-be-bent housing wall 2151 to form the annular bent edge 2111, a force may be applied on an external side of an end of the to-be-bent housing wall 2151 away from the housing side wall 2112 to first bend the to-be-bent housing wall 2151 to be perpendicular to the housing side wall 2112, so that the presealed housing body 215 is in a first intermediate state shown in FIG. 13. Then a force is applied on an end, of the to-be-bent housing wall 2151 bent, away from the housing side wall 2112 to continue to press down the end of the to-be-bent housing wall 2151 away from the housing side wall 2112, so that the presealed housing body 215 is in a second intermediate state shown in FIG. 14.

In the process of bending the to-be-bent housing wall 2151 to be perpendicular to the housing side wall 2112, the magnitude of the force applied is, for example, 600 N to 800 N. In the process of continuing to press down the end of the to-be-bent housing wall 2151 away from the housing side wall 2112, the magnitude of the force is, for example, 100 N to 800 N, which is conducive to the design of 1° < (90° - θ2) ≤ 25°, and further, the magnitude of the action force is, for example, 200 N to 500 N, which is conducive to the design of 5° ≤ (90° - θ2) ≤ 20°.

In the step of applying the crimping force to crimp the annular groove 2114, the force may be applied at the middle of the top of the annular bent edge 2111.

The magnitude of the crimping force is, for example, 250 N to 800 N, which is conducive to the design of 0.2h1 ≤ h2 ≤ 0.8h1 and 10° ≤ θ1 ≤ 80°. Further, the magnitude of the crimping force is, for example, 400 N to 800 N, which is conducive to the design of 0.2h1 ≤ h2 ≤ 0.5h1 and 10° ≤ θ1 ≤ 60°.

Since θ1, θ2, and θ3 are all angular sizes inside the housing body 211, and the angular sizes may be monitored and tested through X-ray, CT, metallography, and other means during and after manufacture. As for a finished battery 20, it is also possible to cut the battery and monitor and measure the size at the part exposed after cutting, and metallography, CT, and other solutions may be used for specific size measurement.

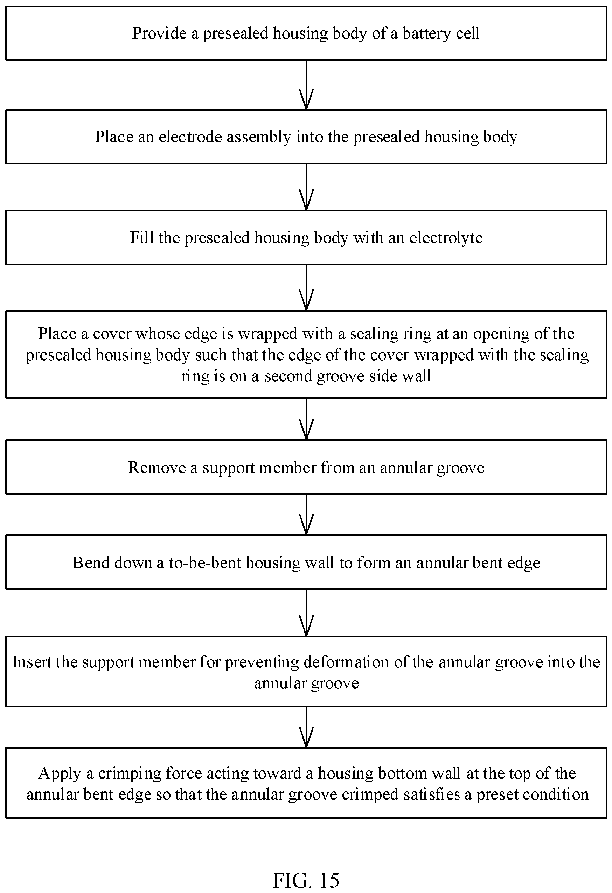

Refer to FIG. 13 and FIG. 15. In some embodiments, the manufacturing method further includes: before the step of bending down the to-be-bent housing wall 2151 to form the annular bent edge 2111, inserting a support member 216 for preventing deformation of the annular groove 2114 into the annular groove 2114; and after the step of bending down the to-be-bent housing wall 2151 to form the annular bent edge 2111 but before the step of applying, at the top of the annular bent edge 2111, a crimping force acting toward the housing bottom wall 2113, removing the support member 216 from the annular groove 2114.

In this design, before the step of bending down the to-be-bent housing wall 2151 to form the annular bent edge 2111, the support member 216 for preventing deformation of the annular groove 2114 is inserted into the annular groove 2114, thereby avoiding deformation of the annular groove 2114 in a process of forming the annular bent edge 2111, and facilitating more accurate control of the crimping degree of the annular groove 2114 when the crimping force is applied at the top of the annular bent edge 2111.

The following further describes features and performance of this application in detail with reference to examples.
I. Batteries were made.
The manufacturing method of battery includes the following steps.
S1. A presealed housing body was provided.
S2. An electrode assembly was placed into the presealed housing body, and the presealed housing body was filled with an electrolyte.
S3. A cover whose edge was wrapped with a sealing ring was placed at an opening of the presealed housing body such that the edge of the cover wrapped with the sealing ring was on a second groove side wall.
S4. A support member was inserted into an annular groove to prevent deformation of the annular groove.
S5: A to-be-bent housing wall was bent down to form an annular bent edge: A force of 600 N to 800 N was applied on an external side of an end of the to-be-bent housing wall away from a housing side wall to first bend the to-be-bent housing wall to be perpendicular to the housing side wall, and a force of a magnitude of F1 was applied on an end, of the to-be-bent housing wall bent, away from the housing side wall to continue to press down the end of the to-be-bent housing wall away from the housing side wall.
S6. The support member was removed from the annular groove.
S7. A crimping force was applied at the middle of the top of the annular bent edge so as to crimp the annular groove, where the force had a magnitude of F2 and acted toward the housing bottom wall.
The structure of a battery manufactured is shown in FIG. 4. The housing body and the cover were made of SPCC steel, and the sealing ring was made of PET. In the housing body, D was 21 mm, h1 was 1.2 mm, h3 was 2.0 mm, L1 was 3.0 mm, θ3 was 90°, and h2/h1, θ1, and (90° - θ2) were configured as designed values.

II. Some battery models were manufactured. The manufacturing method of battery model was basically the same as the foregoing manufacturing method of battery. Battery models in different experimental groups were tested
(1) The only difference between the manufacturing method of battery model and the foregoing manufacturing method of battery was that step S7 was not performed after completion of step S5 (in other words, bent edge processing was performed but annular groove crimping was not performed). Therefore, in the following experimental group, θ1 was 90° and h2/h1 was 1.
θ2 was detected and correspondences between F1 and (90° - θ2) were collected. Battery models in each group were charged, the battery models charged were left standing for 24 h at a temperature of 45°C, and then electrolyte leakage and sealing ring breakage were checked. The results are shown in Table 1.

**Table 1 Correspondences between F1 and (90° - θ2) and performance of battery models**

| Group number | F1 (N) | 90° - θ2 (°) | Electrolyte leakage | Sealing ring breakage |
|---|---|---|---|---|
| 1 | 0 | 0 | Electrolyte leakage occurred during standing | Not broken |
| 2 | (0, 100] | (0, 1] | No electrolyte leakage occurred during standing but electrolyte leakage occurred during later use because of charge and discharge | Not broken |
| 3 | (100, 200] | (1, 5] | Electrolyte leakage neither occurred during standing nor occurred during later use | Not broken |
| 4 | (200, 350] | (5, 10] | Electrolyte leakage neither occurred during standing nor occurred during later use | Not broken |
| 5 | (350, 500] | (10, 20] | Electrolyte leakage neither occurred during standing nor occurred during later use | Not broken |
| 6 | (500, 800] | (20, 25] | Electrolyte leakage neither occurred during standing nor occurred during later use | Slightly broken |
| 7 | >800 | >25 | Electrolyte leakage occurred during standing | Broken |

(2) The only difference between the manufacturing method of battery model and the foregoing manufacturing method of battery was that in step S5, only the operation of "applying a force of 600 N to 800 N on an external side of an end of the to-be-bent housing wall away from a housing side wall to first bend the to-be-bent housing wall to be perpendicular to the housing side wall" and the operation of "applying a force of a magnitude of F1 on an end, of the to-be-bent housing wall bent, away from the housing side wall to continue to press down the end of the to-be-bent housing wall away from the housing side wall" was not performed. Therefore, in the following experimental group, (90° - θ2) was 0°.
θ1, h1, and h2 were detected and correspondences between F2, θ1, and h2/h1 were collected in Table 2 below. Battery models in each group were charged, the battery models charged were left standing for 24 h at a temperature of 45°C, and then the morphology of the plating layer and electrolyte leakage of the housing body were checked. The morphology checking position was the joint of the first groove side wall and the housing side wall. Results are shown in Table 2.

**Table 2 Correspondences between F2, θ1, and h2/h1 and performance of battery models**

| Group number | F2 (N) | h2/h1 | θ1 (°) | Electrolyte leakage | Morpholo gy of plating layer |
|---|---|---|---|---|---|
| 1 | 0 | 1 | 90 | Electrolyte leakage occurred during standing | Not broken |
| 2 | (0, 250) | (0.8, 1) | (80, 90) | Electrolyte leakage occurred during standing | Not broken |
| 3 | [250, 400] | [0.5, 0.8] | [60, 80] | Electrolyte leakage neither occurred during standing nor occurred during later use | Not broken |
| 4 | (400, 600] | [0.4, 0.5) | [40, 60) | Electrolyte leakage neither occurred during standing nor occurred during later use | Not broken |
| 5 | (600, 800] | [0.2, 0.4) | [10, 40) | Electrolyte leakage neither occurred during standing nor occurred during later use | Not broken |
| 6 | (800, 1100] | [0.1, 0.2) | [4, 10) | Electrolyte leakage neither occurred during standing nor occurred during later use | Slightly broken |
| 7 | >1100 | <0.1 | <4 | Electrolyte leakage neither occurred during standing nor occurred during later use | Broken |

III. Batteries were made in the foregoing manufacturing method of battery. The batteries were tested in some specified conditions. The experimental conditions and test results are as follows.

### Test example 1

Experimental condition: F2 was 600 N, h2/h1 was 0.4, and θ1 was 40°. Under this condition, the annular groove was properly crimped.

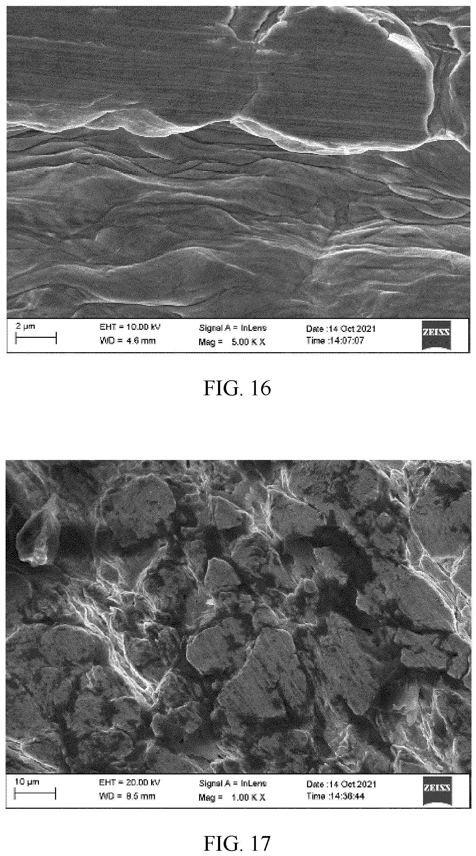

Test result: No electrolyte leakage occurred at the sealing opening between the housing body and the cover; and it can be seen from the morphology of the plating layer shown in FIG. 16 that the plating layer on the surface of a part for inspection was intact and uniformly distributed and had a smooth surface, which means that the plating layer on the surface was not broken and had desirable morphology.

### Test example 2

Experimental conditions: F2 was 1100 N, h2/h1 was 0.1, and θ1 was 4°. Under this condition, the annular groove was over-crimped.

Test result: No electrolyte leakage occurred at the sealing opening between the housing body and the cover; and it can be seen from the morphology of the plating layer shown in FIG. 17 that the plating layer on the surface of a part for inspection was broken: the plating layer was broken into granules and had obvious cracks.

### Test example 3

Experimental conditions: F2 was 400 N, h2/h1 was 0.5, and θ1 was 60°. Under this condition, the annular groove was under-crimped.

Test result: Electrolyte leakage occurred at the sealing opening between the housing body and the cover, that is, the electrolyte leaked.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery comprising a cylindrical housing body, wherein the housing body comprises an annular bent edge, a housing side wall, and a housing bottom wall that are sequentially connected; the housing side wall has an annular groove distributed along a circumferential direction of the housing body; the annular groove has a first groove side wall, a groove bottom wall, and a second groove side wall that are sequentially connected; in a height direction of the housing body, the first groove side wall is located on a side of the annular groove closer to the housing bottom wall, and the second groove side wall is located on a side of the annular groove farther away from the housing bottom wall; in the height direction of the housing body, height of the groove bottom wall is h1 and height of an opening of the annular groove is h2; an end of the first groove side wall close to the housing side wall is a first end of groove side wall, and an end of the first groove side wall away from the housing side wall is a second end of groove side wall; and a connection line direction from the first end of groove side wall to the second end of groove side wall is an extension direction of the first groove side wall, and an included angle between the extension direction of the first groove side wall and the housing side wall adjacent is θ1; wherein 0.2h1 ≤ h2 ≤ 0.8h1 and 10° ≤ θ1 ≤ 80°.

2. The battery according to claim 1, wherein 0.2h1 ≤ h2 ≤ 0.5h1 and 10° ≤ θ1 ≤ 60°.

3. The battery according to claim 1 or 2, wherein in a radial direction of the housing body, an end of the annular bent edge close to the housing side wall is a first bent-edge end and an end of the annular bent edge away from the housing side wall is a second bent-edge end; and a connection line direction from the first bent-edge end to the second bent-edge end is a bent edge direction, and an included angle between the bent edge direction and the housing side wall adjacent is θ2, wherein 1° < (90° - θ2) ≤ 25°.

4. The battery according to claim 3, wherein 5° ≤ (90° - θ2) ≤ 20°.

5. The battery according to any one of claims 1 to 4, wherein 1 mm ≤ h1 ≤ 2 mm.

6. The battery according to any one of claims 1 to 5, wherein an end of the second groove side wall close to the housing side wall is a third end of groove side wall and an end of the second groove side wall away from the housing side wall is a fourth end of groove side wall; and a connection line direction from the fourth end of groove side wall to the third end of groove side wall is an extension direction of the second groove side wall, and an included angle between the extension direction of the second groove side wall and the housing side wall adjacent is θ3, wherein 85° ≤ θ3 ≤ 95°.

7. The battery according to any one of claims 1 to 6, wherein outer diameter of the housing body is D, and width of the annular bent edge in a radial direction of the housing body is L1, wherein 0.1D ≤ L1 ≤ 0.2D.

8. The battery according to any one of claims 1 to 7, wherein a part of the housing side wall located between the annular groove and the annular bent edge is a cap part; in the height direction of the housing body, height of the cap part is h3; and in a radial direction of the housing body, width of the annular bent edge is L1; wherein 0.8L1 ≤ h3 ≤ 1.5L1.

9. A battery module, wherein the battery module comprises a box and the battery as claimed in any one of claims 1 to 8, and the battery is accommodated in the box.

10. An electric device, wherein the electric device comprises the battery according to any one of claims 1 to 8.

11. A manufacturing method of battery, wherein the manufacturing method comprises:
providing a presealed housing body of a battery, wherein the presealed housing body is cylindrical; the presealed housing body comprises a to-be-bent housing wall, a housing side wall, and a housing bottom wall that are sequentially connected; the to-be-bent housing wall is configured to bend down to form an annular bent edge; the housing side wall has an annular groove distributed along a circumferential direction of the presealed housing body; the annular groove has a first groove side wall, a groove bottom wall, and a second groove side wall that are sequentially connected; in a height direction of the housing body, the first groove side wall is located on a side of the annular groove closer to the housing bottom wall, and the second groove side wall is located on a side of the annular groove farther away from the housing bottom wall; in the height direction of the presealed housing body, height of the groove bottom wall is h1 and height of an opening of the annular groove is h2; an end of the first groove side wall close to the housing side wall is a first end of groove side wall, and an end of the first groove side wall away from the housing side wall is a second end of groove side wall; and a connection line direction from the first end of groove side wall to the second end of groove side wall is an extension direction of the first groove side wall, and an included angle between the extension direction of the first groove side wall and the housing side wall adjacent is θ1;
bending down the to-be-bent housing wall to form the annular bent edge; and
applying, at the top of the annular bent edge, a crimping force acting toward the housing bottom wall so that the annular groove crimped satisfies a preset condition, wherein the preset condition is 0.2h1 ≤ h2 ≤ 0.8h1 and 10° ≤ θ1 ≤ 80°.

12. The manufacturing method according to claim 11, wherein the manufacturing method further comprises:
before the step of bending down the to-be-bent housing wall to form the annular bent edge, inserting a support member for preventing deformation of the annular groove into the annular groove; and
after the step of bending down the to-be-bent housing wall to form the annular bent edge but before the step of applying, at the top of the annular bent edge, a crimping force acting toward the housing bottom wall, removing the support member from the annular groove.
